# EUROPÄISCHE PATENTSCHRIFT

(11) **EP 0 727 016 B1**
(45) Veröffentlichungstag und Bekanntmachung des Hinweises auf die Patenterteilung: **07.10.1998**
(21) Anmeldenummer: 94931553.5
(22) Anmeldetag: 26.10.1994
(51) Int. Cl.: F15B 19/00, B60T 17/22, B60T 8/90, F04B 51/00

(54) **VERFAHREN ZUR FUNKTIONSPRÜFUNG EINES HYDRAULISCHEN AGGREGATS**
METHOD OF DETERMINING THE OPERATING CONDITION OF A HYDRAULIC DEVICE
PROCEDE PERMETTANT DE VERIFIER LA FIABILITE DE FONCTIONNEMENT D'UN APPAREIL HYDRAULIQUE

(30) Priorität: 03.11.1993 DE 4337521
(43) Veröffentlichungstag der Anmeldung: 21.08.1996
(73) Patentinhaber: ITT Automotive Europe GmbH, 60488 Frankfurt (DE)
(72) Erfinder: WEIS, Helmut, D-61118 Bad Vilbel (DE)
(86) Internationale Anmeldenummer: EP9403523
(87) Internationale Veröffentlichungsnummer: WO9512761

(56) Entgegenhaltungen:
- EP-A- 0 310 113
- EP-A- 0 487 507
- WO-A-90/02066
- US-A- 4 598 579

## Beschreibung

Die vorliegende Erfindung betrifft ein Verfahren zur Funktionsprüfung eines mehrere hydraulische Funktionseinheiten umfassenden hydraulischen Aggregats, insbesondere eines Aggregats zur Umwandlung von mechanischer in hydraulische Energie, beispielsweise einer Pumpe für inkompressible Medien, nach dem Oberbegriff des Anspruchs 1. Ein derartiges Verfahren ist aus Dokument WO-A-90 02 066 bekannt.

Bisher bekannte Verfahren zur Funktionsprüfung hydraulischer Pumpen sehen vor, die Pumpe unter Betriebsbedingungen auf ihre Funktion zu überprüfen. Dazu wird das vorgesehene Hydraulikmedium von der Pumpe gefördert, wobei beispielsweise Durchflußrate und Pumpenausgangsdruck überprüft werden. Liegen diese Werte im geforderten Toleranzbereich, so gilt die Pumpe als funktionsfähig.

Nachteilig an dieser sogenannten Naßprüfung ist, daß sich Flüssigkeit in der Pumpe befindet, die entfernt werden muß, bevor die Pumpe vom Hersteller an den Verbraucher geliefert wird. Das Reinigen erfordert einen großen Aufwand, ohne daß eine 100%ige Entfernung des Hydraulikmediums ohne unverhältnismäßig großen Aufwand erreicht werden könnte. Insbesondere wenn die Pumpe zur Verwendung in einem hydraulischen Bremssystem für Kraftfahrzeuge eingesetzt werden soll, beispielsweise einer ABS/ASR-Anlage, sollte die Pumpe keine Restflüssigkeit mehr enthalten, da sonst eine Vakuumbefüllung der Bremsanlage äußerst aufwendig wäre. Um ein Vakuum herzustellen, muß in diesem Fall nämlich zunächst erst die gesamte noch in der Pumpe vorhandene Flüssigkeit abgepumpt werden, was selbst bei geringen Flüssigkeitsvolumina einen hohen Aufwand erfordert.

Aus der US-A-4,598,579 ist bereits ein Verfahren zur Funktionsprüfung einer künstlichen Herzklappe für Blut mittels eines gasförmigen Mediums bekannt. Als nachteilig ist hieran anzusehen, daß der Aufbau der Meßanordnung zur Verminderung von Störeinflüssen, die durch die Komponenten der Meßeinrichtung hervorgerufen werden, speziell für die Prüfung dieses Ventils unter Verwendung des kompressiblen Mediums angepaßt sein muß.

Aufgabe der vorliegenden Erfindung ist es daher, ein Verfahren zur Funktionsprüfung von mehrere hydraulische Funktionseinheiten umfassenden hydraulischen Aggregate vorzuschlagen, welches es ermöglicht, weitestgehend trockene Aggregate, insbesondere Pumpen, auszuliefern, d.h. die o.g. Nachteile zu vermeiden.

Eine weitere Aufgabe besteht darin, ein möglichst kostengünstiges Verfahren zur Funktionsprüfung vorzuschlagen, welches es gleichzeitig ermöglicht, eventuelle Produktionsfehler zu lokalisieren.

Erfindungsgemäß werden diese Aufgaben durch die im kennzeichnenden Teil des Anspruchs 1 angegebene Maßnahme gelöst. Es wird also vorgeschlagen, ein aus mehreren hydraulischen Funktionseinheiten komplett montiertes Aggregat zu prüfen, und dazu, anstatt des inkompressiblen hydraulischen Mediums, d.h. des vorgesehenen Betriebsmittels des Aggregats, welches eine Pumpe, ein Motor oder auch eine Turbine etc. sein kann, zum Zwecke der Prüfung ein kompressibles Medium zu verwenden. Im einfachsten Fall wird man dazu Luft verwenden, beispielsweise ölfreie Druckluft, es sind aber auch Gase, wie Stickstoff, Helium oder auch Dampf denkbar.

Das erfindungsgemäße Verfahren zur Funktionsprüfung hydraulischer Aggregate beruht auf dem Gedanken, daß ein Leerlauftest des Aggregats ausreicht, um Dichtigkeit und korrektes Zusammenspiel aller Funktionseinheiten des Aggregats überprüfen zu können. D.h. Funktionseinheiten die im tatsächlichen Betrieb nicht funktionieren, fallen bereits bei der Funktionsprüfung mittels des kompressiblen Mediums auf. Die Richtigkeit dieses Gedankens hat sich in der Praxis gezeigt.

Nach Anspruch 2 ist vorgesehen, während der Funktionsprüfung Druckmessungen an den Druckmitteleingängen bzw. -ausgängen des Aggregats durchzuführen. Dies kann mittels kostengünstiger und einfach zu installierender Drucksensoren geschehen. Eine aufwendige Bestimmung des Fördervolumens ist nicht erforderlich.

Dabei ist es sinnvoll, das zu prüfende Aggregat mit einer an die Eigenschaften des kompressiblen Mediums angepaßten Leistung zu betreiben. Dabei handelt es sich bei einer Pumpe um die Antriebs-, bei einem Motor um die Abtriebsleistung. Um eine reproduzierbare Funktionsprüfung zu gewährleisten, kann diese Leistung größer oder auch kleiner als die vorgesehene Nennleistung gewählt werden. Auf diese Weise können Resonanzschwingungen des kompressiblen Mediums oder andere unerwünschte Effekte vermieden werden.

Nach Anspruch 4 ist vorgesehen, das zu prüfende Aggregat zunächst mit einem bestimmten Anfangsdruck zu beaufschlagen. Dies dient einerseits dazu, einen definierten Anfangszustand herzustellen, beispielsweise Dichtungen gegen ihren Dichtsitz zu drücken, und andererseits eine erste Dichtigkeitsprüfung vorzunehmen. Der dazu geeignete Anfangsdruck hängt beispielsweise von der Geometrie der Arbeitsräume des zu prüfenden Aggregats ab und ist dementsprechend anzupassen.

Aus dem zeitlichen Verlauf der gemessenen Drucke p(t), die nach Anspruch 5 registriert und ausgewertet werden, kann sowohl auf Funktionsfähigkeit als auch auf Fehler im Aggregat geschlossen werden. Zur Auswertung kann dabei der zeitliche Verlauf mit vorgegebenen, z.B. aus Experimenten bestimmten Verläufen verglichen werden. Es ist aber auch denkbar, die gemessenen Werte zunächst zu bearbeiten, z.B. durch Differenzbildung, Verhältnisbildung, Bildung der zeitlichen Ableitung, Integration etc., und diese Werte mit vorgegebenen Werten zu vergleichen. Es hat sich herausgestellt, daß bei geeigneter Wahl der zur Funktionsprüfung einstellbaren Parameter auch bei Aggregaten mit mehreren getrennt voneinander betriebenen Hydraulikkreisen die Meßergebnisse der einzelnen Kreise unabhängig von demjenigen der anderen Kreise sind. Das bedeutet, daß eine Fehlfunktion in einem Kreis keinen Einfluß auf die Meßergebnisse des oder der anderen Kreise ausübt.

Eine Vereinfachung der Funktionsprüfung ergibt sich, wenn man, wie im Anspruch 6 beschrieben, lediglich einzelne, zu verschiedenen Zeitpunkten gemessene Druckwerte heranzieht. Bei geeigneter Wahl der entsprechenden Zeitpunkte können schon aus wenigen diskreten Meßwerten die Funktionsfähigkeit bzw. evtl. vorhandene Funktionsfehler des Aggregats erkannt werden, der gesamte Kurvenverlauf p(t) ist dazu nicht unbedingt erforderlich.

Es hat sich herausgestellt, daß dazu bereits zwei zu verschiedenen Zeiten genommene Druckwerte, wie in Anspruch 7 beschrieben, ausreichen. Liegen die Werte p(t₁), die Differenz p_{d} = p(t₁) - p(t₂) bzw. das Verhältnis V = p(t₁) : p(t₂) in einem bestimmten Meßfenster um einen vorgegebenen Sollwert p₁ₛₒₗₗ, p_{dsoll} bzw. Vₛₒₗₗ, so liegt eine Funktionsfähigkeit der Pumpe vor. Liegen die entsprechenden Werte außerhalb des vorbestimmten Meßfensters, das beispielsweise ± 10% betragen kann, so können aus der Richtung sowie der Größe der Abweichung die aufgetretenen Fehler lokalisiert werden. Dies können beispielsweise fehlerhafte Dichtungen, fehlende Dichtungen, vertauschte Dichtungen etc. sein.

Besonders geeignet ist das vorgeschlagene Prüfverfahren für Kolbenpumpen, die dem bzw. den Kolben vor- bzw. nachgeschaltete Rückschlagventile aufweisen. Hier kann auch gleichzeitig die Funktion der Rückschlagventile und deren Dichtigkeit, sowie ein exakter Kolbenhub festgestellt werden. Auch dies kann über Vergleiche mit experimentell ermittelten Werten geschehen.

Wird dem kompressiblen Medium nach Anspruch 9 ein geringer Volumenanteil eines inkompressiblen Mediums beigemischt, beispielsweise der vorgesehenen Hydraulikflüssigkeit in Form von Nebel (Tröpfchen) oder Dampf, so kann eine Schmierung des Aggregats für die Zeit der Funktionsprüfung erreicht werden. Es ist aber auch möglich, auf eine derartige Schmierung zu verzichten, wenn beim Zusammenbau des Aggregats bereits Gleitmittel in ausreichender Menge eingebracht wurde und die Funktionsprüfung nur eine geringe Laufzeit des Aggregats erfordert. Eine zerstörungsfreie Funktionsprüfung kann auch auf diese Art und Weise gewährleistet sein.

Nach Anspruch 10 wird eine Anlage zur Durchführung des erfindungsgemäßen Verfahrens beansprucht.

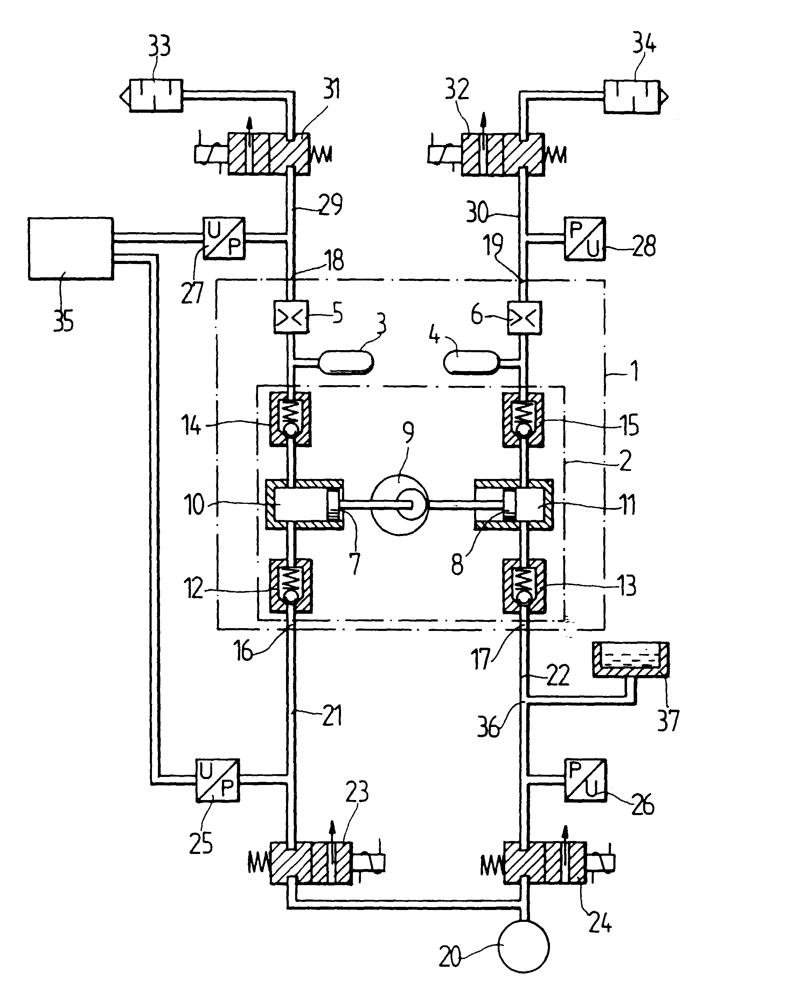

Weitere Merkmale des Verfahrens sind aus der Beschreibung eines Ausführungsbeispiels anhand der Abbildung ersichtlich.

Das in der Abbildung dargestellte Aggregat 1 besteht im wesentlichen aus Pumpe 2, Druckspeichern 3,4 sowie Drosseln 5,6. Die Pumpe 2 weist zwei hydraulisch getrennte Kreise mit je einem Kolben 7,8, die von einem Exzenter 9 angetrieben werden, auf. Dies ist in der Abbildung schematisch dargestellt. Jeder der Kolben 7,8 begrenzt einen Arbeitsraum 10,11 und verändert durch seine vom Exzenter verursachte Bewegung das Volumen der Arbeitsräume 10,11. In die Arbeitskammern 10,11 münden je ein Saugventil 12,13 sowie ein Druckventil 14,15. Diese Ventile sind als Rückschlagventile mit einer bestimmten Vorspannung ausgebildet.

Auf eine nähere Beschreibung des Aufbaus der Ventile 12 bis 15, deren Abdichtung sowie die Abdichtungen zwischen den Kolben 7,8 und den Arbeitsräumen 10,11 wird hier verzichtet. Auch die Wirkungsweise einer exzentergetriebenen Pumpe ist allgemein bekannt und braucht daher hier nicht weiter beschrieben zu werden.

Zur Durchführung der erfindungsgemäßen Funktionsprüfung wird das Aggregat 1 eingangsseitig mit einer Druckluftquelle 20 über die pneumatischen Leitungen 21 und 22 verbunden. Zwischen der Druckluftquelle 20 und den Leitungen 21,22 sitzt je ein 2/2-Wegeventil 23,24, welches elektromagnetisch betätigbar ist und in unbetätigtem Zustand die Verbindung sperrt. Weiterhin befinden sich Drucksensoren 25,26 an den Leitungen 21,22, die den anliegenden Druck in ein elektrisches Spannungssignal umwandeln. An den Ausgängen 18,19 des Aggregats 1 befinden sich Drucksensoren 27,28 an pneumatischen Leitungen 29,30. Die Leitungen 29,30 sind über je ein in unbetätigtem Zustand geschlossenes 2/2-Wegeventil 31,32 mit Druckablaßeinrichtungen 33,34 verbunden. Die Drucksensoren 25,26,27,28 sowie die Ventile 23,24,31,32 sind mit einer Steuer- und Auswerteeinheit 35 verbunden.

### Ablauf der Funktionsprüfung:

Zunächst werden die drucklosen Leitungen 21,22 mit den Eingängen 16,17, sowie die Leitungen 29,30 mit den Ausgängen 18,19 des Aggregats 1 verbunden. Zum Zeitpunkt t₀ wird in den Leitungen 21 bzw. 22 der vorbestimmte Anfangsdruck p₀ eingestellt. Dazu werden die Ventile 23 bzw. 24 von der Steuereinheit 35 in Abhängigkeit von den Signalen der Drucksensoren 25 bzw. 26 entsprechend geöffnet.

Zu einem späteren Zeitpunkt t₁ werden die Ventile 23 und 24 geschlossen, sowie der jeweilig zu diesem Zeitpunkt an den Drucksensoren 27 bzw. 28 gemessene Druckwert p(t₁) registriert. Liegt dieser Wert in einem vorbestimmten Fehlerbereich, um den Sollwert pₛₒₗₗ(t₁), so ist das erste Prüfkriterium erfüllt. Bei evtl. zu hoher Vorspannung der Ventile 12 bis 15 liegt p(t₁) niedriger als pₛₒₗₗ(t₁) bei Undichtigkeiten nach außen liegt p(t₁) wesentlich niedriger als pₛₒₗₗ(t₁). Weist eines der Druckventile 18,19 eine zu niedrige Vorspannung auf, liegt P(t₁) zu hoch.

Nach dem Registrieren der Meßwerte zum Zeitpunkt t₁ wird die Pumpe 2 in Betrieb gesetzt. Die Pumpe wird dazu mit einer verminderten Leistung betrieben, was Resonanzschwingungen des inkompressiblen Mediums vorbeugt.

Zu einem späteren Zeitpunkt t₂ wird der aktuelle Wert p(t₂) an den Drucksensoren 27 bzw. 28 ausgelesen. Liegt die Differenz p_{d} = p(t₁) - p(t₂) in einem vorgegebenen Fehlerbereich um den Wert p_{dsoll}, so ist ein weiteres die Funktionsfähigkeit der Pumpe bestimmendes Kriterium erfüllt. Liegt p über bzw. unter dem zulässigen Fehlerbereich um p_{dsoll}, so kann daraus auf vorliegende Fehler, wie z.B. vertauschte Dichtelemente, geschlossen werden. Dazu kann auch das Verhältnis V = p(t₁) : p(t₂) hinzugezogen werden. Aus diesem Verhältnis kann auch auf die korrekte Füllung der Arbeitsräume 10,11, d.h. auf exakten Hub der Kolben, geschlossen werden.

Nach der Erfassung der Meßwerte zum Zeitpunkt t₂ kann die Pumpe abgeschaltet werden, sowie über die Ventile 31,32 eine Druckentlastung des Aggregats 1 erfolgen. Die Steuer- und Auswerteeinheit 35 signalisiert nun, ob das Aggregat 1 funktionsfähig ist oder ob ein und wenn, welcher Fehler festgestellt wurde. Mit Hilfe dieser Information kann gezielt nach dem Fehler gesucht und ggf. eine Behebung des Fehlers durchgeführt werden.

Eine optionale, an der Leitung 22 schematisch angedeutete Einblasvorrichtung 36 kann dazu dienen, aus einem Behälter 37 Hydraulikmedium in geringem Maß in die das Aggregat 1 zu Beginn des Vorgangs füllende Druckluft einzublasen, und das Aggregat 1 damit zu schmieren.

### Bezugszeichenliste

- 1: Aggregat
- 2: Pumpe
- 3: Druckspeicher
- 4: Druckspeicher
- 5: Drossel
- 6: Drossel
- 7: Kolben
- 8: Kolben
- 9: Exzenter
- 10: Arbeitsraum
- 11: Arbeitsraum
- 12: Saugventil
- 13: Saugventil
- 14: Druckventil
- 15: Druckventil
- 16: Eingang
- 17: Eingang
- 18: Ausgang
- 19: Ausgang
- 20: Druckluftquelle
- 21: pneumatische Leitung
- 22: pneumatische Leitung
- 23: 2/2-Wegeventil
- 24: 2/2-Wegeventil
- 25: Drucksensor
- 26: Drucksensor
- 27: Drucksensor
- 28: Drucksensor
- 29: pneumatische Leitung
- 30: pneumatische Leitung
- 31: 2/2-Wegeventil
- 32: 2/2-Wegeventil
- 33: Druckablaßeinrichtung
- 34: Druckablaßeinrichtung
- 35: Steuer- und Auswerteeinheit
- 36: Einblasvorrichtung
- 37: Behälter

## Patentansprüche

1. Verfahren zur Funktionsprüfung eines mehrere hydraulische Funktionseinheiten (2 - 15), beispielsweise Pumpe, Ventil, Drossel etc., umfassenden hydraulischen Aggregats (1) für inkompressible Medien, **dadurch gekennzeichnet, daß**
die hydraulischen Funktionseinheiten (2 - 15) zu einem kompletten Aggregat (1) zusammengefügt werden und die Funktionsprüfung des kompletten Aggregats (1) mittels eines kompressiblen Mediums erfolgt.

2. Verfahren nach Anspruch 1, dadurch **gekennzeichnet**, daß das Aggregat (1) in Betrieb gesetzt wird und die sich im Betrieb an dem bzw. den Druckmitteleingängen (16,17) und/oder Druckmittelausgängen (18,19) einstellenden Drücke gemessen werden.

3. Verfahren nach Anspruch 1 oder 2, dadurch **gekennzeichnet**, daß das Aggregat (1) mit einer an die Eigenschaften des kompressiblen Mediums angepaßten Leistung betrieben wird.

4. Verfahren nach Anspruch 2 oder 3, dadurch **gekennzeichnet**, daß der bzw. die Druckmitteleingänge (16,17) und/oder Druckmittelausgänge (18,19) mit einem bestimmten Anfangsdruck (p₀) beaufschlagt werden, bevor das Aggregat (1) in Betrieb gesetzt wird.

5. Verfahren nach Anspruch 2, 3 oder 4, dadurch **gekennzeichnet**, daß der zeitliche Verlauf der gemessenen Drucke (p(t)) registriert und ausgewertet wird.

6. Verfahren nach Anspruch 5, dadurch **gekennzeichnet**, daß zu verschiedenen Zeitpunkten (t₁,t₂,...) gemessene Druckwerte (p(t₁),p(t₂),...) zur Ermittlung der Funktionsfähigkeit oder des eine FunKtionsunfähigkeit verursachenden Fehlers herangezogen werden.

7. Verfahren nach Anspruch 6, dadurch **gekennzeichnet**, daß Druckwerte (p(t₁),(p(t₂)) zu zwei Zeitpunkten (t₁,t₂) gemessen werden, und aus dem Wert von (p(t₁)), der Differenz (p_{d} = p(t₁) - p(t₂)) sowie dem Verhältnis (V = p(t₁) : p(t₂)) der Druckwerte auf Funktionsfähigkeit bzw. eine Funktionsunfähigkeit des Aggregats (1) verursachende Fehler geschlossen wird.

8. Verfahren nach einem der vorhergehenden Ansprüche, dadurch **gekennzeichnet**, daß das zu prüfende Aggregat (1) eine Kolbenpumpe (2) ist, die dem bzw. den Kolben (7,8) vor- bzw. nachgeschaltete Rückschlagventile (12 bis 15) aufweist.

9. Verfahren nach einem der vorhergehenden Ansprüche, dadurch **gekennzeichnet,** daß dem kompressiblen Medium ein geringer Volumenanteil eines inkompressiblen Mediums beigemischt wird.

10. Anlage insbesondere zur Durchführung des Verfahrens nach einem der vorhergehenden Ansprüche, dadurch **gekennzeichnet,** daß eine Druckluftquelle (20) mit pneumatischen Leitungen (21,22) verbunden ist, wobei zwischen der Druckluftquelle (20) und den Leitungen (21,22) je ein Ventil (23,24) sitzt, welches in unbetätigtem Zustand die Verbindung sperrt, wobei sich Drucksensoren (25,26) an den Leitungen (21,22) befinden, die den anliegenden Druck in ein elektrisches Spannungssignal umwandeln, daß Anschlüsse zum Anschließen von Eingängen (16,17) eines zu prüfenden Aggregats (1) an den Leitungen (21,22), sowie Anschlüsse zum Anschließen von Ausgängen (18,19) des Aggregats (1) an pneumatische Leitungen (29,30) vorhanden sind, daß sich Drucksensoren (27,28) an den pneumatischen Leitungen (29,30) befinden, wobei die Leitungen (29,30) über je ein in unbetätigtem Zustand geschlossenes Ventil (31,32) mit Druckablaßeinrichtungen (33,34) verbunden sind, und daß die Drucksensoren (25,26,27,28) sowie die Ventile (23,24,31,32) mit einer Steuer- und Auswerteeinheit (35) verbunden sind, wobei die Steuer- und Auswerteeinheit (35) eine Elektronik aufweist, die die Ventile (23,24,31,32) in Abhängigkeit von den Signalen der Drucksensoren (25,26,27,28) und der Zeit steuert, sowie Anzeigeeinrichtungen zur Anzeige aufgetretener Fehler bzw. der Fehlerfreiheit des zu prüfenden Aggregats (1) aufweist.

## Claims

1. A method of testing the function of a hydraulic device (1) for incompressible media which includes several hydraulic functional units (2 to 15), such as a pump, valve, restrictor, etc.,
**characterized** in that the hydraulic functional units (2 to 15) are assembled to form a complete device (1), and the function test of the complete device (1) is performed by way of a compressible medium.

2. A method as claimed in claim 1,
**characterized** in that operation of the device (1) is started, and the pressures prevailing during operation on the pressure-fluid inlet(s) (16, 17) and/or pressure-fluid outlet(s) (18, 19) are measured.

3. A method as claimed in claim 1 or 2,
**characterized** in that the power operating the device (1) is conformed to the properties of the compressible medium.

4. A method as claimed in claim 2 or 3,
**characterized** in that a determined starting pressure (p₀) is applied to the pressure-fluid inlet(s) (16, 17) and/or pressure-fluid outlet(s) (18, 19) before the device (1) is started.

5. A method as claimed in claim 2, 3 or 4,
**characterized** in that the time-responsive course of the measured pressures (p(t)) is recorded and analyzed.

6. A method as claimed in claim 5,
**characterized** in that pressure values (p(t₁), (p(t₂),...) that are measured at different times (t₁, t₂,...) are taken into account to determine the operability or the defect causing a malfunction.

7. A method as claimed in claim 6,
**characterized** in that pressure values (p(t₁), (p(t₂)) are measured at two times (t₁, t₂), and operability or defects causing a malfunction of the device (1) are concluded from the value of (p(t₁), the difference (p_{d} = p(t₁) - p(t₂)) and the ratio (V = p(t₁) : p(t₂)) of the pressure values.

8. A method as claimed in any one of the preceding claims, **characterized** in that the device (1) being tested is a piston pump (2) which includes non-return valves (12 to 15) connected upstream or downstream of the piston(s) (7, 8).

9. A method as claimed in any one of the preceding claims, **characterized** in that a small volume portion of an incompressible medium is added to the compressible medium.

10. A system, in particular for implementing the method as claimed in any one of the preceding claims,
**characterized** in that a compressed-air source (20) is connected to pneumatic lines (21, 22), one valve (23, 24) being respectively interposed between the compressed-air source (20) and the lines (21, 22) and closing the connection in the non-actuated condition, wherein pressure sensors (25, 26) are provided on the lines (21, 22) to convert the prevailing pressure into an electric voltage signal, in that there are connections to connect inlets (16, 17) of a device (1) being tested to the lines (21, 22) and to connect outlets (18, 19) of the device (1) to pneumatic lines (29, 30), in that pressure sensors (27, 28) are provided on the pneumatic lines (29, 30), the lines (29, 30) being connected to pressure-discharge means (33, 34) by way of each one valve (31, 32), closed in the non-actuated condition, and in that the pressure sensors (25, 26, 27, 28) and the valves (23, 24, 31, 32) are connected to a controlling and analyzing unit (35), the controlling and analyzing unit (35) including electronics to control the valves (23, 24, 31, 32) in response to the signals of the pressure sensors (25, 26, 27, 28) and time-responsively, and indicating apparatus to indicate existing defects or the fail-safety of the device (1) being tested.

## Revendications

1. Procédé permettant de contrôler le fonctionnement d'une machine hydraulique (1) pour fluides incompressibles, englobant plusieurs unités fonctionnelles hydrauliques (2 - 15), par exemple pompe, valve, étranglement, etc.,
caractérisé en ce qu'on assemble les unités fonctionnelles hydrauliques (2 - 15) de façon à former une machine (1) complète et en ce que le contrôle de fonctionnement de la machine (1) complète est effectué au moyen d'un fluide compressible.

2. Procédé suivant la revendication 1, caractérisé en ce qu'on met la machine (1) en marche et en ce que les pressions s'établissant en fonctionnement sur la ou les entrées d'agent de pression (16, 17) et/ou les sorties d'agent de pression (18, 19) sont mesurées.

3. Procédé suivant la revendication 1 ou 2, caractérisé à ce que la machine (1) est mise en marche avec une puissance adaptée aux propriétés du fluide compressible.

4. Procédé suivant la revendication 2 ou 3, caractérisé en ce qu'une pression initiale (p₀) déterminée est appliquée à la ou aux entrées d'agent de pression (16, 17) et/ou à la ou aux sorties d'agent de pression (18, 19) avant que l'on mette la machine (1) en marche.

5. Procédé suivant la revendication 2, 3 ou 4, caractérisé en ce que la variation dans le temps des pressions mesurées (p(t)) est enregistrée et analysée.

6. Procédé suivant la revendication 5, caractérisé en ce que des valeurs de pression (p(t₁), p(t₂), ... ) mesurées a différents instants (t₁, t₂, ... ) servent à déterminer l'aptitude au fonctionnement ou le défaut provoquant une inaptitude au fonctionnement.

7. Procédé suivant la revendication 6, caractérisé en ce que des valeurs de pression (p(t₁), p(t₂)) sont mesurées à deux instants (t₁, t₂) et en ce qu'à partir de la valeur de p(t1), de la différence (p_{d} = p(t₁) - p(t₂)) et/ou du rapport (V = p(t1) : p(t2)) des valeurs de pression, il est conclu à une aptitude au fonctionnement ou à un défaut provoquant une inaptitude de la machine (1) au fonctionnement.

8. Procédé suivant l'une des revendications précédentes, caractérisé en ce que la machine (1) à contrôler est une pompe à piston (2) qui comporte des valves antiretour (12 à 15) montées en amont et en aval du ou des pistons (7, 8).

9. Procédé suivant l'une des revendications précédentes, caractérisé en ce qu'une faible proportion en poids d'un fluide incompressible est mélangée au fluide compressible.

10. Installation, notamment pour la mise en oeuvre du procédé suivant l'une des revendications précédentes, caractérisée en ce qu'une source d'air comprimé (20) est raccordée au moyen de conduites pneumatiques (21, 22), tandis qu'entre la source d'air comprimé (20) et chacune des conduites (21, 22), il est disposé une valve (23, 24) respective qui, à l'état non commandé, bloque la liaison, et que, sur les conduites (21, 22), il est disposé des manomètres (25, 26) qui convertissent la pression qui est établie en un signal de tension électrique, en ce qu'il est prévu des raccords destinés à raccorder des entrées (16, 17) d'une machine (1) à contrôler aux conduites (21, 22), ainsi que des raccords destinés à raccorder des sorties (18, 19) de la machine (1) à des conduites pneumatiques (29, 30), en ce que des manomètres (27, 28) sont disposés sur les conduites pneumatiques (29, 30), les conduites (29, 30) étant raccordées à des détendeurs (33, 34) respectifs chacune par l'intermédiaire d'une valve (31, 32) fermée à l'état non commandé, et en ce que les manomètres (25, 26, 27, 28) et les valves (23, 24, 31, 32) sont reliées à une unité de commande et d'analyse (35), l'unité de commande et d'analyse (35) comportant un circuit électronique, qui commande les valves (23, 24, 31, 32) en fonction des signaux des manomètres (25, 26, 27, 28) et du temps, et des dispositifs d'affichage servant à afficher l'existence d'un défaut ou l'absence de défaut de la machine (1) à contrôler.
